# EUROPÄISCHE PATENTSCHRIFT

(11) **EP 4 006 406 B1**
(45) Veröffentlichungstag und Bekanntmachung des Hinweises auf die Patenterteilung: **31.12.2025**
(21) Anmeldenummer: 21209922.0
(22) Anmeldetag: 23.11.2021
(51) Int. Cl.: F21S 4/20, F21V 21/02, F21V 31/04, F21Y 103/10, F21Y 115/10

(54) **LED-STREIFEN FÜR LEISTENFÖRMIGE BESCHLÄGE**
LED STRIP FOR STRIP-SHAPED FITTINGS
BANDES LED POUR FERRURES EN FORME DE LATTES

(30) Priorität: 24.11.2020 AT 5023420 U
(43) Veröffentlichungstag der Anmeldung: 01.06.2022
(73) Patentinhaber: Sanube GmbH, 4776 Diersbach (AT)
(72) Erfinder: Sallaberger, Stefan, 4776 Diersbach (AT)
(74) Vertreter: KLIMENT & HENHAPEL

(56) Entgegenhaltungen:
- EP-A2- 2 641 777
- DE-A1- 102016 115 402
- DE-A1- 102017 100 606
- US-A1- 2020 109 828
- US-B1- 10 801 716

## Beschreibung

Die Erfindung betrifft die Verwendung eines leistenförmigen Beschlages zur Befestigung eines LED-Streifens in Laderäumen von Nutzfahrzeugen mit einem streifenförmigen Kunststoffkörper und einer Mehrzahl von in einer Längsachse des streifenförmigen Kunststoffkörpers aufeinander folgend angeordneter und im Kunststoffkörper eingebetteter LEDs, sowie einer aus dem Kunststoffkörper ragenden elektrischen Kontaktierung für die LEDs zum Anschluss an eine Stromversorgung, wobei der Kunststoffkörper eine obere Deckfläche, zwei in einer ersten Querachse des Kunststoffkörpers voneinander beabstandete, äußere Seitenflächen sowie eine in einer zweiten Querachse des Kunststoffkörpers von der Deckfläche beabstandete untere Bodenfläche aufweist.

LED-Streifen der genannten Art werden an leistenförmigen Beschlägen für Laderäume von Nutzfahrzeugen angeordnet, wobei die leistenförmigen Beschläge an Innenwänden des Laderaumes befestigt werden und etwa als Zurrschienen zur Befestigung von Haltestangen zur Sicherung von Ladegut dienen. Die Befestigung des Beschlages erfolgt in der Regel mithilfe von Schraubverbindungen, wobei die leistenförmigen Beschläge mithilfe der Schrauben senkrecht zu ihrer Längsachse an der Innenwand des Laderaumes angeschraubt werden. Die Haltestangen sind zumeist teleskopierbar ausgeführt und werden mit ihren Enden in Lochaufnahmen von zwei an gegenüberliegenden Innenwänden des Laderaumes montierten Zurrschienen arretiert. Hierfür weist der leistenförmige Beschlag eine Abfolge von Lochaufnahmen auf, die in Längsrichtung des leistenförmigen Beschlages angeordnet sind und über eine sich in Längsrichtung des Beschlages erstreckende nutförmige Aufnahme miteinander verbunden sind.

Zudem erweist sich eine Beleuchtung der Laderäume als vorteilhaft. Hierfür wurde vorgeschlagen Beschläge der genannten Art mit LED (Light Emitting Diodes)-Streifen zu versehen, die an Seitenteilen der Beschläge befestigt werden. Bei den LED-Streifen handelt es sich jeweils um eine Abfolge von LEDs, die über eine elektrische Kontaktierung miteinander verbunden und in weiterer Folge in einem Kunststoffkörper eingebettet werden, wobei eine aus dem Kunststoffkörper ragende elektrische Kontaktierung einen Anschluss der LEDs an eine Stromversorgung ermöglicht. Ein solcher leistenförmiger Beschlag mit LED-Streifen wurde etwa in der GM 50158/2019 der Anmelderin vorgeschlagen. Bekannte Beschläge wurden in der DE 10 2017 100606 A1 beschrieben. Weitere Ausführungen von LED-Streifen wurden in der EP 2 641 777 A2, US 2020/109828 A1, US 10,801,716 B1 und der DE 10 2016 115 402 A1 beschrieben.

In der Praxis zeigt sich das Problem, dass die LEDs wegen thermischer Belastung oder mechanischer Beschädigungen immer wieder funktionsunfähig werden. Der betreffende Beschlag muss in weiterer Folge demontiert und ausgetauscht werden. Diese Vorgangsweise ist nicht nur wartungsintensiv, sondern verursacht auch Mehrkosten aufgrund des erforderlichen Austausches der gesamten Schiene.

Es besteht daher das Ziel der Erfindung darin, im Falle einer Funktionsunfähigkeit oder auch einer gewünschten Nachrüstung eine leichtere Austauschbarkeit oder Nachrüstung eines leistenförmigen Beschlages für Laderäume von Nutzfahrzeugen mit LEDs zu ermöglichen.

Diese Ziele werden durch die Merkmale von Anspruch 1 erreicht. Anspruch 1 bezieht sich auf die Verwendung eines leistenförmigen Beschlages zur Befestigung in Laderäumen von Nutzfahrzeugen mit einem leistenförmigen Basisteil, der mit einer sich in Längsrichtung des Basisteils erstreckenden nutförmigen Aufnahme versehen ist, und einer Abfolge von Lochaufnahmen, die in Längsrichtung des leistenförmigen Beschlages angeordnet sind und über die nutförmige Aufnahme miteinander verbunden sind, als Klemmprofil für einen LED-Streifen mit einem streifenförmigen Kunststoffkörper und einer Mehrzahl von in einer Längsachse des streifenförmigen Kunststoffkörpers aufeinander folgend angeordneter und im Kunststoffkörper eingebetteter LEDs, wobei der LED-Streifen mit einer aus dem Kunststoffkörper ragenden elektrischen Kontaktierung für die LEDs zum Anschluss an eine Stromversorgung versehen ist, und der Kunststoffkörper eine obere Deckfläche, zwei in einer ersten Querachse des Kunststoffkörpers voneinander beabstandete, äußere Seitenflächen sowie eine in einer zweiten Querachse des Kunststoffkörpers von der Deckfläche beabstandete untere Bodenfläche aufweist, und der Kunststoffkörper aus einem ersten und einem zweiten Kunststoffmaterial gebildet wird, wobei das erste Kunststoffmaterial einen die äußeren Seitenflächen und die Bodenfläche des Kunststoffkörpers bildenden Außenkörper bildet, und das zweite Kunststoffmaterial einen den Außenkörper ausfüllenden und die Deckfläche des Kunststoffkörpers bildenden Innenkörper bildet, wobei die äußeren Seitenflächen jeweils über einen den Querschnitt senkrecht zur Längsachse parallel zur ersten Querachse erweiternden Wulst in die untere Bodenfläche übergehen, und die LEDs auf einem streifenförmigen Träger angeordnet sind, der in dem von den beiden Wulsten umgrenzten Wulstbereich angeordnet und im zweiten Kunststoffmaterial eingebettet ist, wobei der LED-Streifen in die nutförmige Aufnahme eingesetzt ist, indem die nutförmige Aufnahme zwei in Längsrichtung des Basisteils verlaufende Hinterschneidungen aufweist, in denen jeweils ein Wulst aufgenommen ist.

Die Ausführung des LED-Streifens im Rahmen der Erfindung ermöglicht es, den LED-Streifen direkt in die nutförmige Aufnahme des leistenförmigen Beschlages einzusetzen, die in der Regel bei Zurrschienen für den Laderaum von Nutzfahrzeugen vorgesehen ist. Wie bereits ausgeführt wurde, verbindet diese nutförmige Aufnahme die Abfolge der in Längsrichtung des leistenförmigen Beschlages angeordneten Lochaufnahmen, und weist in der Regel zwei in Längsrichtung des Beschlages verlaufende Hinterschneidungen auf, in denen jeweils ein Wulst des erfindungsgemäßen LED-Streifens aufgenommen werden kann. Der leistenförmige Beschlag, der in herkömmlicher Weise zur Befestigung von Haltestangen und dergleichen zur Sicherung von Ladegut dient, wird somit als Klemmprofil verwendet, in den der LED-Streifen erfindungsgemäß eingedrückt werden kann, wobei der Wulstbereich des LED-Streifens von den Hinterschneidungen der nutförmigen Aufnahme aufgenommen und der LED-Streifen auf diese Weise fixiert wird. Eine zusätzliche Befestigung über Verkleben oder Verschrauben kann dadurch unterbleiben, sodass der LED-Streifen im Rahmen einer Reparatur oder einer Nachrüstung rasch in vorhandene Beschläge eingesetzt oder aus ihnen entnommen werden kann. Leistenförmige Beschläge, die ansonsten als Zurrschienen verwendet werden, können somit alternativ auch als Klemmprofile für die erfindungsgemäß verwendeten LED-Streifen verwendet werden.

Im Rahmen der Erfindung wird ferner vorgeschlagen, dass die LEDs auf einem streifenförmigen Träger angeordnet sind, der in dem von den beiden Wulsten umgrenzten Wulstbereich des Kunststoffkörpers eingebettet ist. Diese Maßnahme erleichtert die Herstellung, da der erfindungsgemäß verwendete Kunststoffkörper aus unterschiedlichen Kunststoffmaterialien gebildet wird, wobei ein erstes Kunststoffmaterial einen die äußeren Seitenflächen, die Wulste und die Bodenfläche des Kunststoffkörpers bildenden Außenkörper bildet, und ein zweites Kunststoffmaterial einen den Außenkörper ausfüllenden und die Deckfläche des Kunststoffkörpers bildenden Innenkörper bildet. Der streifenförmige LED-Träger kann somit in den Wulstbereich des Außenkörpers eingelegt werden, bevor der Außenkörper mit dem zweiten Kunststoffmaterial ausgegossen wird, wobei der LED-Träger im Wulstbereich während des Verfüllens des Außenkörpers sicher aufgenommen wird.

Für eine solche Ausführungsform wird insbesondere auch vorgeschlagen, dass der Außenkörper innere Seitenflächen aufweist, die jeweils über einen den Querschnitt senkrecht zur Längsachse parallel zur ersten Querachse verengenden Vorsprung in Innenflächen des vom Außenkörper gebildeten Wulstbereiches übergehen. Auf diese Weise bildet der Außenkörper in seinem Wulstbereich innere Hinterschneidungen, in denen der Träger der LEDs aufgenommen wird. Diese Ausführung verbessert die Fixierung des streifenförmigen LED-Trägers während des Verfüllens des Außenkörpers mit dem zweiten Kunststoffmaterial.

Hinsichtlich der Kunststoffmaterialien wird vorgeschlagen, dass es sich bei dem ersten Kunststoffmaterial um PVC handelt. Das erste Kunststoffmaterial kann transparent ausgeführt sein, muss aber nicht unbedingt transparent ausgeführt sein. Da das erste Kunststoffmaterial in erster Linie der Bildung des U-förmigen Außenkörpers zur sicheren Aufnahme des LED-Trägers dient, stehen Eigenschaften wie Formstabilität im Vordergrund. Das zweite Kunststoffmaterial muss hingegen transparent sein, da es das von den LEDs emittierte Licht so wenig wie möglich schwächen soll und dem Licht den Austritt durch die Deckfläche des Kunststoffkörpers möglichst ungeschwächt ermöglichen soll. Hinsichtlich des zweiten Kunststoffmaterials wird etwa Polyurethan vorgeschlagen. Zudem bietet es auch Kostenvorteile, wenn die unterschiedlichen Anforderungen an das Kunststoffmaterial des Kunststoffkörpers wie Transparenz, Formstabilität und Preis von unterschiedlichen Kunststoffmaterialien erfüllt werden.

Der erfindungsgemäß verwendete LED-Streifen dient vor allem der Anwendung mit leistenförmigen Beschlägen im Nutzfahrzeugbereich. Diese Beschläge weisen in der Regel wie bereits erwähnt eine nutförmige Aufnahme auf, die die Abfolge der in Längsrichtung des leistenförmigen Beschlages angeordneten Lochaufnahmen verbindet, sowie zwei in Längsrichtung des Beschlages verlaufende Hinterschneidungen, in denen jeweils ein Wulst des erfindungsgemäßen LED-Streifens aufgenommen werden kann. Um die formschlüssige Aufnahme hierbei zu optimieren wird vorgeschlagen, dass sich der Wulstbereich entlang der zweiten Querachse über 50-75% der gesamten Abmessung des Kunststoffkörpers erstreckt.

Die Deckfläche des Kunststoffkörpers schließt vorzugsweise mit einer oberen Oberfläche des Beschlages bündig ab. Das von den LEDs emittierte Licht tritt über die Deckfläche des LED-Streifens in den Außenraum aus. Der LED-Streifen kann im Zuge einer Reparatur oder Nachrüstung einfach in die nutförmige Aufnahme des Beschlages eingedrückt werden, oder der nutförmigen Aufnahme entnommen werden. Eine weitere Befestigung wie etwa Kleben oder dergleichen kann entfallen.

Die Erfindung wird in weiterer Folge anhand von Ausführungsbeispielen mithilfe der beiliegenden Zeichnungen näher erläutert. Es zeigen hierbei die
Fig. 1 eine perspektivische Ansicht einer Ausführungsform eines erfindungsgemäß verwendeten Beschlages mit eingesetztem LED-Streifen,
Fig. 2 den Beschlag gemäß der Fig.1 von oben gesehen,
Fig. 3 eine Schnittdarstellung für den Beschlag gemäß der Fig.1,
Fig. 4a eine Schnittdarstellung für einen erfindungsgemäß verwendeten LED-Streifen in einem Bereich eines LED, und die
Fig. 4b eine Schnittdarstellung für einen erfindungsgemäßen LED-Streifen in einem Bereich zwischen zwei LEDs.

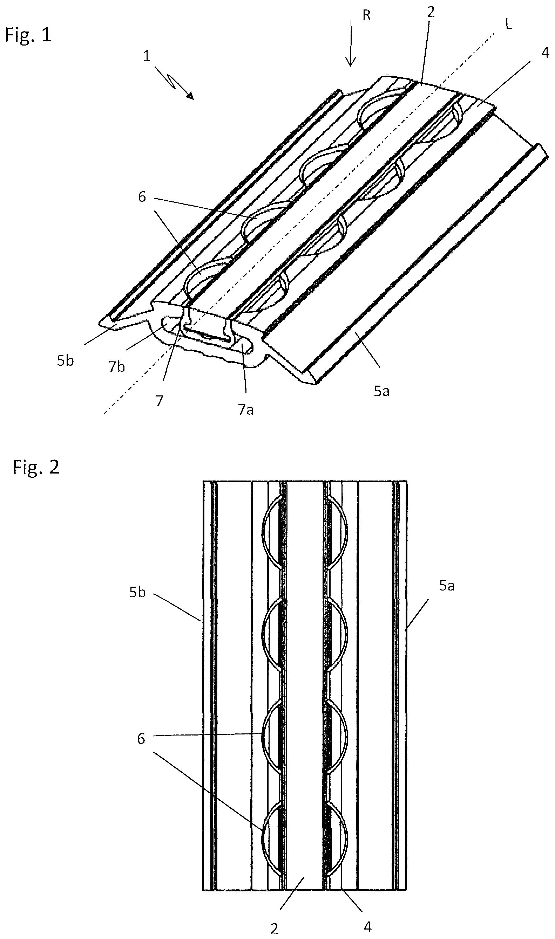

Zunächst wird auf die Fig. 1 Bezug genommen, die eine perspektivische Ansicht einer Ausführungsform eines erfindungsgemäßen Beschlages 1 mit eingesetztem LED-Streifen 2 zeigt. Die Länge des Beschlages 1 entlang seiner Längserstreckung kann dabei je nach Anforderung entsprechend gewählt werden, wobei die Fig. 1 lediglich ein Teilstück zur Erläuterung der Erfindung zeigt. Der Beschlag 1 weist an einem seiner Enden ein in der Fig. 1 nicht gezeigtes Endteil auf, an dem sich die Kabelzuführung für die LEDs 3 befindet. Am gegenüberliegenden Ende weist der Beschlag 1 ein weiteres Endteil auf, das einen Abschluss für die vom Beschlag 1 gebildete Schiene bildet. Der in der Fig. 1 gezeigte Beschlag 1 ist leistenförmig ausgeführt und wird in einer senkrecht zur Längserstreckung des Beschlages 1 orientierten Befestigungsrichtung R an Innenwänden eines Laderaumes eines Nutzfahrzeuges montiert. Diese Montage erfolgt in der Regel mithilfe von Schrauben, die entsprechende Bohrungen des Beschlages 1 durchdringen und in Befestigungsrichtung R eingeschraubt werden.

Der Beschlag 1 wird in der gezeigten Ausführungsform aus einem mittigen, leistenförmigen Basisteil 4, sowie zwei an den beiden Längsseiten des leistenförmigen Basisteiles 4 angeformten Seitenteilen 5a, 5b gebildet, die ebenfalls jeweils leistenförmig ausgeführt sind. Alternative Ausführungsformen weisen keine Seitenteile 5a, 5b auf. Der Basisteil 4 ist vorzugsweise aus einem metallischen Werkstoff, beispielsweise Aluminium, gefertigt.

In den Fig. 1 und 2 sind des Weiteren die Lochaufnahmen 6 des Basisteils 4 ersichtlich, in denen wie erwähnt beispielsweise Haltestangen zur Sicherung von Ladegut eingesetzt werden können, sofern der Beschlag 1 nicht als Klemmprofil für einen erfindungsgemäßen LED-Streifen 2 verwendet wird. Hierfür weist der leistenförmige Beschlag 1 eine Abfolge von Lochaufnahmen 6 auf, die in Längsrichtung des leistenförmigen Beschlages 1 angeordnet sind und über eine sich in Längsrichtung des Beschlages 1 erstreckende nutförmige Aufnahme 7 miteinander verbunden sind. Die nutförmige Aufnahme 7 weist zwei in Längsrichtung des Basisteils 4 verlaufende Hinterschneidungen 7a, 7b auf und öffnet sich gegen die Befestigungsrichtung R.

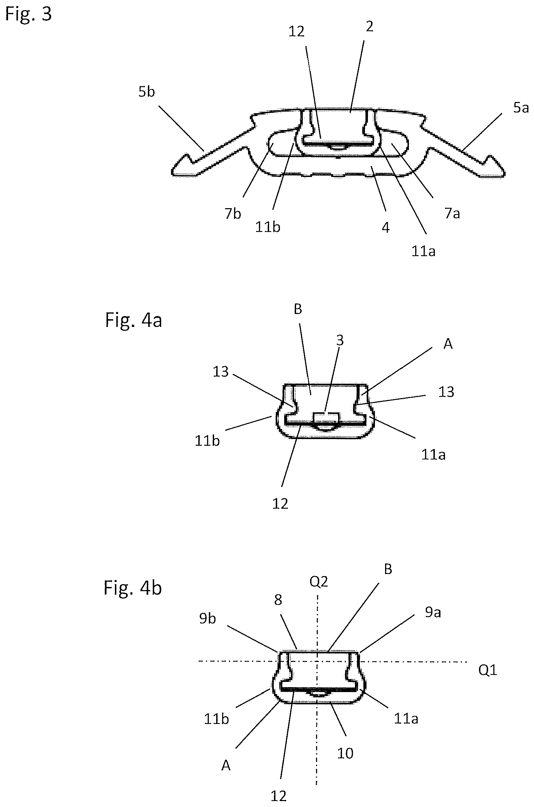

Die Fig. 1 bis 3 zeigen ferner einen LED-Streifen 2, der in die nutförmige Aufnahme 7 eingesetzt ist und in Befestigungsrichtung R in die Aufnahme 7 eingedrückt wurde. Der LED-Streifen 2 wird aus einem streifenförmigen Kunststoffkörper und einer Mehrzahl von in einer Längsachse L des streifenförmigen Kunststoffkörpers aufeinander folgend angeordneter und im Kunststoffkörper eingebetteter LEDs 3 (siehe Fig. 4a) gebildet. Der streifenförmige Kunststoffkörper weist ferner eine elektrische Kontaktierung für die LEDs 3 zum Anschluss an eine Stromversorgung auf, die an einer seiner Enden aus dem Kunststoffkörper ragt (in den Fig. 1-4 nicht ersichtlich). Wie in der Fig. 4b gezeigt ist, weist der Kunststoffkörper eine obere Deckfläche 8, zwei in einer ersten Querachse Q1 des Kunststoffkörpers voneinander beabstandete, äußere Seitenflächen 9a, 9b sowie eine in einer zweiten Querachse Q2 des Kunststoffkörpers von der Deckfläche 8 beabstandete untere Bodenfläche 10 auf. Die äußeren Seitenflächen 9a, 9b gehen dabei jeweils über einen den Querschnitt senkrecht zur Längsachse L parallel zur ersten Querachse Q1 erweiternden Wulst 11a, 11b in die untere Bodenfläche 10 über. Die LEDs 3 sind auf einem streifenförmigen Träger 12 angeordnet, der in dem von den beiden Wulsten 11a, 11b umgrenzten Wulstbereich des Kunststoffkörpers eingebettet ist. Der Träger 12 dient dabei der Fixierung der LEDs 3, wobei eine Mehrzahl an LEDs 3 in Längsrichtung des Trägers 12 entlang der Längsachse L nebeneinander liegend angeordnet und über eine elektrische Kontaktierung miteinander verbunden sind. Die Ausführung der LEDs 3 selbst sowie deren elektrische Kontaktierung mithilfe zweier stromführender Kabel wird in herkömmlicher Weise vorgenommen.

Die erfindungsgemäße Ausführung des LED-Streifens 2 ermöglicht es, den LED-Streifen 2 direkt in die nutförmige Aufnahme 7 des leistenförmigen Beschlages 1 einzusetzen, wobei die beiden in Längsrichtung des Beschlages 1 verlaufenden Hinterschneidungen 7a, 7b jeweils einen Wulst 11a, 11b des erfindungsgemäßen LED-Streifens 2 aufnehmen. Der leistenförmige Beschlag 1, der in herkömmlicher Weise zur Befestigung von Haltestangen und dergleichen zur Sicherung von Ladegut dient, wird somit als Klemmprofil verwendet, in den der erfindungsgemäße LED-Streifen 2 eingedrückt werden kann, wobei der Wulstbereich des LED-Streifens 2 von den Hinterschneidungen 7a, 7b der nutförmigen Aufnahme 7 aufgenommen und der LED-Streifen 2 auf diese Weise fixiert wird. Eine zusätzliche Befestigung über Verkleben oder Verschrauben kann dadurch unterbleiben, sodass der LED-Streifen 2 im Rahmen einer Reparatur oder einer Nachrüstung rasch in vorhandene Beschläge 1 eingesetzt oder aus ihnen entnommen werden kann.

Die Fig. 3 und 4 zeigen ferner eine mögliche Ausführung des Kunststoffkörpers aus unterschiedlichen Kunststoffmaterialien, wobei ein erstes Kunststoffmaterial einen die äußeren Seitenflächen 9a, 9b, die Wulste 11a, 11b und die Bodenfläche 10 des Kunststoffkörpers bildenden Außenkörper A bildet, und ein zweites Kunststoffmaterial einen den Außenkörper A ausfüllenden und die Deckfläche 8 des Kunststoffkörpers bildenden Innenkörper B bildet. Der Außenkörper A weist dabei innere Seitenflächen auf, die jeweils über einen den Querschnitt des Kunststoffkörpers parallel zur ersten Querachse Q1 verengenden Vorsprung 13 in Innenflächen des vom Außenkörper A gebildeten Wulstbereiches übergehen. Auf diese Weise bildet der Außenkörper A in seinem Wulstbereich innere Hinterschneidungen, in denen der Träger 12 aufgenommen wird. Diese Ausführung verbessert die Fixierung des Trägers 12 während des Verfüllens des Außenkörpers A mit dem zweiten Kunststoffmaterial. Im Zuge der Herstellung des LED-Streifens 2 kann somit der streifenförmige Träger 12 der LEDs 3 in den Wulstbereich des Außenkörpers A eingelegt werden, bevor der Außenkörper A mit dem zweiten Kunststoffmaterial ausgegossen wird, wobei der Träger 12 im Wulstbereich während des Verfüllens des Außenkörpers A sicher aufgenommen wird.

Hinsichtlich der Kunststoffmaterialien wird vorgeschlagen, dass es sich bei dem ersten Kunststoffmaterial um PVC handelt, das gemäß der Ausführungsform der Fig. 1-4 intransparent ist. Hinsichtlich des zweiten Kunststoffmaterials wird etwa Polyurethan vorgeschlagen, das nach seiner Aushärtung für das von den LEDs emittierte Licht transparent ist.

Wie der Fig. 1 entnommen werden kann, ist das Profil des Basisteils 4 und der Seitenteile 5a, 5b vorzugsweise so gewählt, dass sich ein möglichst flacher Aufbau ergibt. Die Deckfläche 8 des Kunststoffkörpers schließt dabei vorzugsweise mit einer oberen Oberfläche des Beschlages 1 bündig ab. Das von den LEDs 3 emittierte, sichtbare Licht tritt über die Deckfläche 8 des LED-Streifens 2 in den Außenraum aus.

Der LED-Streifen 2 kann im Zuge einer Reparatur oder Nachrüstung einfach in die nutförmige Aufnahme 7 des Beschlages 1 eingedrückt werden, oder der nutförmigen Aufnahme 7 entnommen werden. Eine weitere Befestigung wie etwa Kleben oder dergleichen kann entfallen. Somit wird ein mit einem LED-Streifen 2 versehener Beschlag 1 bereit gestellt, der im Falle einer Funktionsunfähigkeit oder auch einer gewünschten Nachrüstung eine leichtere Austauschbarkeit oder Nachrüstung eines leistenförmigen Beschlages 1 für Laderäume von Nutzfahrzeugen mit LEDs 3 ermöglicht.

## Patentansprüche

1. Verwendung eines leistenförmigen Beschlages (1) zur Befestigung in Laderäumen von Nutzfahrzeugen mit einem leistenförmigen Basisteil (4), der mit einer sich in Längsrichtung des Basisteils (4) erstreckenden nutförmigen Aufnahme (7) versehen ist, und einer Abfolge von Lochaufnahmen (6), die in Längsrichtung des leistenförmigen Beschlages (1) angeordnet sind und über die nutförmige Aufnahme (7) miteinander verbunden sind, als Klemmprofil für einen LED-Streifen (2) mit einem streifenförmigen Kunststoffkörper und einer Mehrzahl von in einer Längsachse (L) des streifenförmigen Kunststoffkörpers aufeinander folgend angeordneter und im Kunststoffkörper eingebetteter LEDs (3), wobei der LED-Streifen (2) mit einer aus dem Kunststoffkörper ragenden elektrischen Kontaktierung für die LEDs (3) zum Anschluss an eine Stromversorgung versehen ist, und der Kunststoffkörper eine obere Deckfläche (8), zwei in einer ersten Querachse (Q1) des Kunststoffkörpers voneinander beabstandete, äußere Seitenflächen (9a, 9b) sowie eine in einer zweiten Querachse (Q2) des Kunststoffkörpers von der Deckfläche (8) beabstandete untere Bodenfläche (10) aufweist, und der Kunststoffkörper aus einem ersten und einem zweiten Kunststoffmaterial gebildet wird, wobei das erste Kunststoffmaterial einen die äußeren Seitenflächen (9a, 9b) und die Bodenfläche (10) des Kunststoffkörpers bildenden Außenkörper (A) bildet, und das zweite Kunststoffmaterial einen den Außenkörper (A) ausfüllenden und die Deckfläche (8) des Kunststoffkörpers bildenden Innenkörper (B) bildet, wobei die äußeren Seitenflächen (9a, 9b) jeweils über einen den Querschnitt senkrecht zur Längsachse (L) parallel zur ersten Querachse (Q1) erweiternden Wulst (11a, 11b) in die untere Bodenfläche (10) übergehen, und die LEDs (3) auf einem streifenförmigen Träger (12) angeordnet sind, der in dem von den beiden Wulsten (11a, 11b) umgrenzten Wulstbereich angeordnet und im zweiten Kunststoffmaterial eingebettet ist, wobei der LED-Streifen (2) in die nutförmige Aufnahme (7) eingesetzt ist, indem die nutförmige Aufnahme (7) zwei in Längsrichtung des Basisteils (4) verlaufende Hinterschneidungen (7a, 7b) aufweist, in denen jeweils ein Wulst (11a, 11b) aufgenommen ist.

2. Verwendung eines leistenförmigen Beschlages (1) nach Anspruch 1, **dadurch gekennzeichnet, dass** der Außenkörper (A) innere Seitenflächen aufweist, die jeweils über einen den Querschnitt senkrecht zur Längsachse (L) parallel zur ersten Querachse (Q1) verengenden Vorsprung (13) in Innenflächen des vom Außenkörper (A) gebildeten Wulstbereiches übergehen.

3. Verwendung eines leistenförmigen Beschlages (1) nach Anspruch 1 oder 2, **dadurch gekennzeichnet, dass** es sich bei dem ersten Kunststoffmaterial um PVC handelt.

4. Verwendung eines leistenförmigen Beschlages (1) nach einem der Ansprüche 1 bis 3, **dadurch gekennzeichnet, dass** es sich bei dem zweiten Kunststoffmaterial um Polyurethan handelt.

5. Verwendung eines leistenförmigen Beschlages (1) nach einem der Ansprüche 1 bis 4, **dadurch gekennzeichnet, dass** sich der Wulstbereich entlang der zweiten Querachse (Q2) über 50-75% der gesamten Abmessung des Kunststoffkörpers erstreckt.

## Claims

1. Use of a strip-shaped fitting (1) for fastening in loading spaces of commercial vehicles, comprising a strip-shaped base part (4) which is provided with a groove-shaped receptacle (7) extending in the longitudinal direction of the base part (4), and a sequence of hole receptacles (6) which are arranged in the longitudinal direction of the strip-shaped fitting (1) and are connected to one another via the groove-shaped receptacle (7), as a clamping profile for an LED strip (2) with a strip-shaped plastic body and a plurality of LEDs (3) arranged successively in a longitudinal axis (L) of the strip-shaped plastic body and embedded in the plastic body, wherein the LED strip (2) is provided with an electrical contact projecting from the plastic body for the LEDs (3) for connection to a power supply, and the plastic body has an upper cover surface (8), two outer side surfaces (9a, 9b) spaced apart from one another in a first transverse axis (Q1) of the plastic body, and a lower floor surface (10) spaced apart from the cover surface (8) of the plastic body along a second transverse axis (Q2), and the plastic body is formed from a first and a second plastic material, wherein the first plastic material forms an outer body (A) forming the outer side surfaces (9a, 9b) and the bottom surface (10) of the plastic body, and the second plastic material forms an inner body (B) filling the outer body (A) and forming the cover surface (8) of the plastic body, wherein the outer side surfaces (9a, 9b) each merge into the lower bottom surface (10) via a bead (11a, 11b) expanding the cross-section perpendicular to the longitudinal axis (L) parallel to the first transverse axis (Q1), and the LEDs (3) are arranged on a strip-shaped carrier (12) which is arranged in the bead region delimited by the two beads (11a, 11b) and is embedded in the second plastic material, wherein the LED strip (2) is inserted into the groove-shaped receptacle (7) in that the groove-shaped receptacle (7) has two undercuts (7a, 7b) extending in the longitudinal direction of the base part (4), in each of which a bead (11a, 11b) is received.

2. Use of a strip-shaped fitting (1) according to claim 1, **characterized in that** the outer body (A) has inner side surfaces, which each merge into inner surfaces of the bead area formed by the outer body (A) via a projection (13) narrowing the cross section perpendicular to the longitudinal axis (L) parallel to the first transverse axis (Q1).

3. Use of a strip-shaped fitting (1) according to claim 1 or 2, **characterized in that** the first plastic material is PVC.

4. Use of a strip-shaped fitting (1) according to one of claims 1 to 3, **characterized in that** the second plastic material is polyurethane.

5. Use of a strip-shaped fitting (1) according to one of claims 1 to 4, **characterized in that** the bead region extends along the second transverse axis (Q2) over 50-75% of the total dimension of the plastic body.

## Revendications

1. Utilisation d'une ferrure en forme de barre (1) destinée à la fixation dans les espaces de chargement de véhicules utilitaires avec une pièce de base (4) en forme de barre, laquelle est prévue dotée d'une rainure d'accueil (7) s'étendant dans la direction longitudinale de la pièce de base (4), et d'une succession de trous d'accueil (6) disposés dans la direction longitudinale de la ferrure en forme de barre (1) et reliés l'un à l'autre par le biais de la rainure d'accueil (7) en tant que profil de coincement pour une bande de LED (2) dotée d'un corps plastique en forme de bande et d'une pluralité de LED (3) disposées l'une à la suite de l'autre dans un axe longitudinal (L) du corps plastique en forme de bande et enrobées dans le corps plastique, dans laquelle la bande de LED (2) est prévue avec une mise en contact électrique pour les LED (3) saillant du corps plastique pour raccordement à une alimentation électrique, et le corps plastique comporte une surface de couverture supérieure (8), deux surfaces latérales extérieures (9a, 9b) à distance l'une de l'autre dans un premier axe transversal (Q1) du corps plastique ainsi qu'une surface de fond inférieure (10) à distance de la surface de couverture (8) dans un deuxième axe transversal (Q2) du corps plastique, et le corps plastique est constitué d'un premier et d'un deuxième matériau plastique, dans laquelle le premier matériau plastique constitue un corps externe (A) formant les surfaces latérales extérieures (9a, 9b) et la surface de fond (10), et le deuxième matériau plastique constitue un corps interne (B) remplissant le corps externe (A) et formant la surface de couverture (8) du corps plastique, dans laquelle les surfaces latérales extérieures (9a, 9b) passent respectivement dans la surface de fond inférieure (10) par le biais d'un bourrelet (11a, 11b) élargissant la section transversale perpendiculairement à l'axe longitudinal (L) et parallèlement au premier axe transversal (Q1), et les LED (3) sont disposées sur un support (12) en forme de bande, lequel est disposé dans la zone délimitée par les deux bourrelets (11a, 11b) et est enrobé dans le deuxième matériau plastique, dans laquelle la bande de LED (2) est insérée dans la rainure d'accueil (7), la rainure d'accueil (7) comportant deux échancrures (7a, 7b) dans la direction longitudinale de la pièce de base (4) qui accueillent chacune un bourrelet (11a, 11b).

2. Utilisation d'une ferrure en forme de barre (1) selon la revendication 1, **caractérisée en ce que** le corps externe (A) comporte des surfaces latérales internes, lesquelles passent respectivement dans les surfaces latérales de la zone de bourrelet formée par le corps externe (A) par le biais d'une saillie (13) rétrécissant la section transversale perpendiculairement à l'axe longitudinal (L) et parallèlement au premier axe transversal (Q1).

3. Utilisation d'une ferrure en forme de barre (1) selon la revendication 1 ou 2, **caractérisée en ce que** le premier matériau plastique est du PVC.

4. Utilisation d'une ferrure en forme de barre (1) selon l'une des revendications 1 à 3, **caractérisée en ce que** le deuxième matériau plastique est du polyuréthane.

5. Utilisation d'une ferrure en forme de barre (1) selon l'une des revendications 1 à 4, **caractérisée en ce que** la zone de bourrelet s'étend le long du deuxième axe transversal (Q2) sur 50-75 % de la dimension totale du corps plastique.
